# EUROPEAN PATENT APPLICATION

(11) **EP 3 373 252 A1**
(43) Date of publication of application: **12.09.2018**
(21) Application number: 16861663.9
(22) Date of filing: 07.11.2016
(51) Int. Cl.: G07B 15/00, B64F 1/30

(54) **SYSTEM FOR INTEGRATED PASSENGER AND LUGGAGE CONTROL**

(30) Priority: 06.11.2015 ES 201531600
(71) Applicant: Sistemas Tecnicos Y Montajes, S.L., 29130 Alhaurín de la Torre (Malaga) (ES)
(72) Inventor: CASTRO MAILLO, Rafael, 29130 Alhaurín de la Torre (Malaga) (ES)
(74) Representative: Herrero & Asociados, S.L.
(86) International application number: PCT/ES2016/070787
(87) International publication number: WO 2017/077167

(57) **Abstract**

An integral system comprising a central computer platform (11) on a network that centralizes information related to the control of passengers and baggage to which are connected:
- control equipment (12) for passengers and baggage which measures a parameter of the carry-on baggage (21) used by a classifier to determine a category of the carry-on baggage (21) and which is compared with a condition defined by a transportation company;
- a payment point (13) providing the passenger with means for carrying out the pending payment, if the previous comparison indicates a pending payment; and
- an access management subsystem (14) that enables/disables the access to areas defined by the transportation company based on the previous comparison and whether the passenger has carried out, if they were so indicated previously, the pending payment in the payment point (13).

## Description

### OBJECT OF THE INVENTION

The present invention generally falls within the field of passenger transportation and, in a more particular manner, in the sector of devices and systems for supporting the passenger boarding process and baggage control in airports.

More particularly, the present invention relates to a system which integrates the entire process for managing the passenger and controlling their baggage in an airport scenario.

### BACKGROUND OF THE INVENTION

The aeronautical sector is characterized by being a highly competitive sector where each of the airlines has to fight to earn a place in the market. Thus, in order to increase profitability, the greatest efforts are focused on optimizing the operational processes over which the companies have control and correctly making use of the airport infrastructure in order to be able to reach the desired levels of efficiency and effectiveness. For this reason, the majority of them are focused on reducing the time that the airplane is on the ground ("turn-around" in aeronautical jargon) since the airline companies do not generate any revenue while they are on the ground, and, the longer they are parked, the more airport fees they have to pay.

The turn-around time of an aircraft, understood as the time that includes the arrival of the aircraft at the platform and the placement of the chocks until the removal thereof and the departure of the aircraft, is approximately 30-60 minutes and the crucial component of this process is the boarding of the passengers. In prior studies, it was calculated that the decrease in cost associated with the reduction of the boarding process for an active plane is 30$/minute. The decrease of one minute in the boarding process of each flight implies an annual cost reduction of $ 5,475,000 for an airline that operates 500 flights per day. For this reason, one of the main objectives of an airline company is to reduce the total turn-around time as much as possible. One of the most important elements of that total time, both for the client satisfaction and for financial reasons for the airline, is the duration time of the passenger boarding process.

Thus, speed, precision and efficiency are crucial in order to minimize the total turn-around time of the aircraft. As mentioned previously, the passenger boarding is one of the critical activities within the turn-around process of an aircraft, since the boarding cannot start until the other activities have been finished. The total time of the boarding process depends on factors such as the size of the airplane, the airport infrastructure, the ground handling services, amount of staff and carry-on suitcases or the behavior of the passengers. Some factors are controllable and others are uncontrollable.

Furthermore, the control of their carry-on baggage is involved in the passenger boarding process. There is equipment such as that described in ES2461940 which controls both the weight and the dimensions of the carry-on baggage by automatically comparing those properties with the weight and dimension limits established by each airline. However, experimentation in real airport scenarios has given the result that an advanced or strict dimensional or weight control is not practical, since the heterogeneity in both the behavior of the passengers and the shapes, appearances, densities and deformations in the baggage to be taken into account make said precise control provide results that are not useful.

The objective technical problem that is presented is to provide equipment with the capacity to integrate the means and the functions that enable the management of the passenger boarding process and the efficient control of their baggage, in order to automatically execute all the tasks that are currently performed manually by the aircraft ground handling companies.

### DESCRIPTION OF THE INVENTION

The present invention serves to solve the previously mentioned problem, resolving the drawbacks that the solutions mentioned in the state of the art have, by means of an automated and computerized system that facilitates compliance with the related carry-on baggage rules for the transportation companies (in particular airline companies), checking that the passenger meets those requirements regarding the same, while managing a safer and quicker boarding of the passenger.

The integral control system of the boarding process for passengers with the carry-on baggage that they can optionally carry proposed herein is configured such that it enables a series of functions, with a flexible configuration for adapting it to the specific requirements of each company that offers the service of transporting passengers, which are executed automatically in a parallel manner in order to optimize/minimize the boarding time per passenger, and furthermore guaranteeing the compliance on behalf of the passengers with the requirements established in relation to carry-on baggage. The system also integrates communication with external systems into the process, from ones for information about the companies to ones for charging the fees established in the policies of the companies for charging services. Additionally, the system offers the option of also keeping the passenger informed at all times, for example by means of a visual interface and issuing, at the end of the process, a ticket or receipt of the validity of their baggage and, in the case of it being needed for boarding, of the payment made by the passenger in the same place where this control process is performed.

The fundamental process of this control system for passengers and carry-on baggage resides in the features and singularities of the analysis of the carry-on baggage, which go beyond the mere strict size or weight control that an electronic meter like the ones existing in the state of the art can involve.

In the proposed system a centralized control of both the passenger and the characteristics of the carry-on baggage is performed which allows for a series of conditions to be defined, for each passenger record, which enable access to different areas of the airport that the airline or the airport entity wants to enable or control. This means, for example, that if the passenger can only board if they have paid the allowance corresponding to the control of their carry-on baggage, in the payment point enabled to do so in this integral automatic control system, the access of the passenger to the aircraft at the boarding point is not allowed/enabled until the system has validated their allowance payment and only when said payment is consolidated is it possible for the passenger to access the boarding areas or the aircraft by using their boarding pass.

The system that is described thus makes decisions based on:
- the characteristics of the carry-on baggage that enable it to be classified into one baggage category or another, and
- the conditions that each transportation company imposes on that baggage in order to allow the boarding.

Meanwhile, the solutions of the state of the art are limited to a control of the baggage based exclusively on measuring weight and size of the baggage. The present invention classifies the carry-on baggage according to N levels or categories based on a series of characteristics, which are not limited only to dimensions and weight, rather that more factors can be analyzed (for example, even the color: "Red suitcases cannot go on"). Moreover, weight is one of the parameters that can be controlled, but it is not essential; in fact, the weight parameter of the baggage can be simply a trigger for the measuring, but the weight value is not used unless the airline wants it to be taken into account, and, in that case, that value is handled in another part of the work flow in order to not influence the boarding time per passenger.

Additionally, the system implements a decision tree in order to classify each baggage category that is generalized, because it does not just examine if a piece of baggage exceeds certain dimensions or measurements in order to give a yes/no answer to enable the boarding. The present invention, apart from analyzing whether or not a certain dimension is exceeded, analyzes the profile of that dimension in order to remove false negatives, and based on the profile that it has, different decisions can be made. This is achieved by means of a Classifier.

In the context of the invention, a Classifier is an assembly of routines that enable the discrimination of a given object among certain categories (with a certain percentage of effectiveness), being based on learning or training, determined by a series of assemblies of objects of which the category to which they correspond is known.

In an exemplary embodiment of the invention, the system uses a Bayesian Classifier that enables it to be known, with an effectiveness of close to 95%, for example, by means of a photograph of the baggage, whether there is a suitcase, a backpack, a travel bag, etc., being able to make different decisions or different limits or characteristics based on the category or the type of baggage it is.

One aspect of the invention relates to a passenger and baggage control system, comprising the following means:
- at least a control equipment of baggage and passengers,
- one or more payment points for the passengers,
- a subsystem for managing one or more accesses that enables/disables the access of the passengers to one or several areas defined by the passenger and baggage transportation company (for example, boarding areas of an airport)
- and a central computer platform connected on a network to the access management subsystem, the payment points and the passenger and baggage control equipment.

In the proposed system, each control equipment, located in a control point which the passenger accesses with their carry-on baggage (if they are carrying it), comprises an inner space for placing and analyzing that carry-on baggage, for which reason the inner space has at least one sensor for capturing at least one parameter of the carry-on baggage that is used in determining a category of the carry-on baggage. A classifier, which goes inside the software (processing means), that can be configured from the control equipment, is what determines the category of the carry-on baggage, in order for it to then be compared with one or more conditions defined previously by the passenger and baggage transportation company.

Based on the results of this comparison and, if that result indicates a pending payment, once the passenger completes the pending payment in one of the payment points, the access management subsystem is activated in order to enable or disable the access of the passenger to the corresponding area(s).

The central computer system, which centralizes information related to the control of passengers and baggage, is what provides information about which corresponding access area is enabled for that passenger. In a possible preferred exemplary embodiment, that central computer platform knows such data because it is connected by a network to a departure control system (DCS) of an airline. In order to speed up the information handling process, including the information received from the control equipment, the payment points and the access management subsystem, in a preferred exemplary embodiment, the information is uploaded to the central computer platform by passing through intermediate batches by means of a plurality of asynchronous worker threads opened by each of control equipments.

The main advantages of the present invention are that:
- It provides an integral system that makes the boarding process more efficient, which results in a greater speed of the process and, therefore, in considerable savings for the airline companies.
- It allows for a wide range of hand baggage to be effectively controlled
- The system is able to be adapted and configured for the installation and operation thereof both in boarding areas and in common areas of an airport. The system can be thus equipped with a dual interface based on whether it is going to be autonomous equipment that is used simply (in "check-in" mode) to classify the baggage of the passengers (unattended baggage), without any additional functionality; or, whether it is going to be used by airline staff to then perform the boarding and, in this case, the interface shows detailed information about each passenger and their carry-on baggage, similar to what the DCS do.
- The system for the integral management of the baggage and passenger control process can be installed in the boarding gates of the airports in order to automatically carrying out all the methods that, in the prior state of the art, the handling staff from the airline companies carry out in a manual and scattered manner when the passengers are ready to get on the plane after going through the security control (analysis of the boarding pass, ID confirmation, analysis of the transported baggage, automatic generation of the identifying tags for the carry-on baggage that is not apt to go in the cabin, taking the temperature of the passenger, photograph of the baggage, etc.). All these functions are integrated into the same system.
- In particular, the baggage control process explained herein is based on the verification of a series of specific characteristics for each category of carry-on baggage, which can be adapted or modified by each airline. The dimensional control is not exact or precise, but rather it can be modified and adapted based on a series of filters, routines and decisions, which means that a response that is practical and useful for the airline can be reached based on the characteristics of each category of carry-on baggage that the airline has decided to implement. Said filters, routines and decisions are aimed at envisaging the multiple and heterogeneous possibilities that arise when verifying a piece of carry-on baggage in a real scenario, which go beyond the mere strict dimensional control.
- The system enables integration by means of the use of NFC, RFID and Beacons solutions in order to facilitate the passenger experience in the terminals and the boarding, for example: a reader is placed in the entrance of the airport, by the reception point for the passenger, such that the passengers can load their trip information in their identifier (smartphone, identifying bracelet with an RFID tag, etc.) upon moving closer. From there, as they move around the airport, the passenger can receive offers on their phone about discounts in the duty free shops, restaurants and other offers related to the application scenario.

### BRIEF DESCRIPTION OF THE FIGURES

What follows is a very brief description of a series of drawings that aid in better understanding the invention, and which are expressly related to an embodiment of said invention that is presented by way of a non-limiting example of the same.
FIGURE 1.- Shows a block diagram of the system architecture for the integral control of passengers and baggage, according to a preferred embodiment of the invention.
FIGURE 2.- Shows a schematic representation of an inner space for the carry-on baggage of the baggage control equipment, according to a possible embodiment of the invention.
FIGURE 3.- Shows the base of the inner space for the carry-on baggage tilted in one direction, according to a possible embodiment of the invention.
FIGURE 4.- Shows the base of the inner space for the carry-on baggage tilted in another direction, according to another possible embodiment of the invention.
FIGURE 5.- Shows a diagram of the operation of a sensor of the inner space for the carry-on baggage, according to a possible embodiment of the invention.
FIGURE 6.- Shows a possible location of a sensor in the inner space for the carry-on baggage, according to an embodiment of the invention.
FIGURE 7.- Shows another possible location of a sensor in the inner space for the carry-on baggage, according to another embodiment of the invention.
FIGURE 8.- Shows one other location of a sensor in the inner space for the carry-on baggage, according to another embodiment of the invention.
FIGURE 9.- Shows a schematic representation of three comparison examples of the carry-on baggage with a dimensional condition, according to a possible embodiment of the invention.
FIGURE 10.- Shows a possible scenario in which the system for the integral control of passengers and equipment is applied, according to an embodiment of the invention.
FIGURE 11.- Shows a schematic representation of the baggage control equipment with the inner space for the carry-on baggage and passenger ID and boarding pass readers, according to a possible embodiment of the invention.
FIGURE 12.- Shows a diagram of the asynchronous handling of information for the integral control of passengers and baggage, according to an embodiment of the invention.

### PREFERRED EMBODIMENT OF THE INVENTION

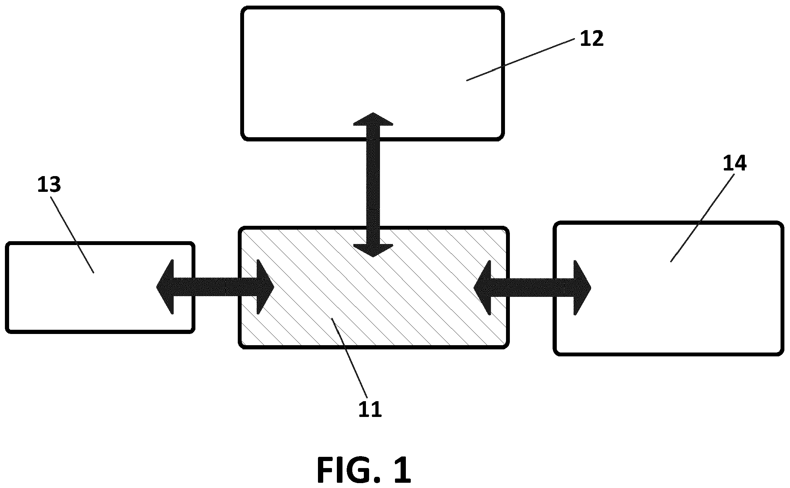

Figure 1 shows a diagram of the architecture of the integral control system for passengers and baggage, comprising four blocks that are different but connected to each other:
i. A central computer platform **11** for the control and management of all of the information involved in the process of enabling the boarding of passengers, including their carry-on baggage. In an example of an application scenario, this platform **11** is connected to the computer platform of the airline company or DCS (Departure Control System).
ii. Control equipment **12** for passengers and carry-on baggage comprising an inner space **20** where the carry-on baggage **21** is placed and controlled, a reception point for the passenger and a verification point for the boarding pass where, meanwhile, the passenger and their boarding pass are analyzed respectively.
iii. A payment point **13** having economic transactions means with which it allows the passenger, once they or their carry-on baggage have been controlled in the control equipment **12**, to be able to make the payment of the corresponding allowances and, eventually, gain access to the areas that the airline considers appropriate based on their situation (normally the aircraft, but also VIP areas, etc.).
iv. An access management subsystem **14** which manages the access to the aforementioned areas: gates for boarding the aircraft, waiting rooms, VIP areas, common areas of the airport, etc. Thus, the access management subsystem **14** can be connected to mechanisms for accessing areas such as turnstiles, automatic doors, etc.

In general terms, the integral management system for passengers and carry-on baggage performs multiple operations among which are:
- In the verification point for the boarding pass, analyzing the ticket or the boarding pass of the passenger, for example, through a boarding pass reader that the control equipment **12** has, cross-checking it with the identity documents of the passenger. For the general situation in which the boarding pass is scanned, an allowed amount of carry-on baggage can be established based on whether the passenger is traveling in first or second class, for example.
- In the inner space **20**, analyzing and taking photographs of the carry-on baggage **21** of each passenger by means of image verification by comparing it to the policies of each airline company.
- In the reception point for the passenger, a photograph can also be taken of the passenger in those countries where the law allows it, the temperature of the passenger can be taken, the passenger can be identified, and the corresponding extra charges for those elements that exceed the limits that the company has, etc., are generated and issued for the passenger. The identification of the passenger can be done using facial recognition: a camera for reading the information from the National ID/passport, and using artificial vision to compare the photo from the National ID with the face of the passenger. If there is no match, an alert pops up so that the passenger can be reviewed by the handling staff.
- In the payment point **13**, the passenger pays, with the enabled forms of payment, what they owe for not meeting the conditions of the ticket. If a passenger who is in the frequent flyer program or is already registered on the platform is detected, they are automatically charged at the payment point **13**, such that the passenger only needs to accept the charge. In this manner the boarding line is prevented from being held up. Additionally, in the payment point **13** the system includes one or more printers, a printer for tags for the baggage once it has been paid, and a printer for receipts for the payment.
- It can generate the necessary documentation that the captain of the plane needs to sign before the departure of the plane, which is called a manifest, generate alarms to warn when the cabin of the plane is full, and issue identifying tags for the carry-on baggage when decided by the staff of the airline company, etc. In this case the system generates tags for the transportation of the baggage in the hold, and charging the passenger by credit card or another type of payment system. The printing of the tag is performed in the payment point **13** and not in the control equipment **12.** There is the possibility of printing tags for the hold even though the category of the carry-on baggage is good, for any reason, for example because only one piece of hand luggage is allowed and the passenger has two, even though the two comply, one of them must be tagged. There is also the possibility to print a CABIN APPROVED tag, instead of the tag for the hold, for baggage that are found in common areas, said tag containing a date and flight record to be thereby distinguished. By improving the technology for measuring space in the cabin, especially in the general case in which the airline wants to have a category for "Small carry-on baggage" which is placed under the seat in front of the passenger, the system ensures that, once the space limit in the cabin has been exceeded, the baggage items do not hold up the boarding, but rather in that case hold tags are printed for all the baggage items regardless of the category
- In the control equipment **12**, a Classifier simply classifies the baggage and, based on that classification, the system decides what to do with the passenger: whether to pass them on to one of the boarding areas through the access management subsystem **14** or send them to the payment point **13** and afterwards to their boarding area through the access management subsystem **14.** The analysis of the boarding pass enables the system to tell the passenger which line they have to wait in based on the boarding area. If the architecture of the airport allows it, different areas with seats can be provided for the orderly waiting of the passengers. The access to each of these is controlled by the boarding pass (even if they leave to go to the bathroom; to go back in, the boarding pass is scanned and if they have already passed through the control, the turnstile opens, if not, it does not open for them).
- In the reception point for the baggage to be taken down to the hold, equivalent to the auto drop-off for baggage, the duly tagged carry-on baggage is dropped off so that the handling staff of the airline company may take it down to the hold of the aircraft.

The fundamental process of this control system for passengers and carry-on baggage resides in the features and singularities of the analysis of the carry-on baggage in the control equipment **12**, which go beyond mere strict size or weight control that a conventional electronic meter can entail. This process is described below.

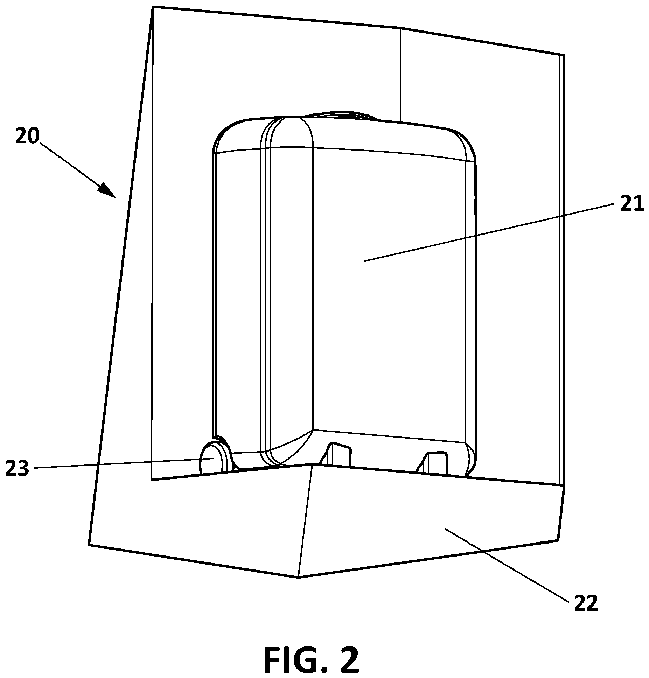

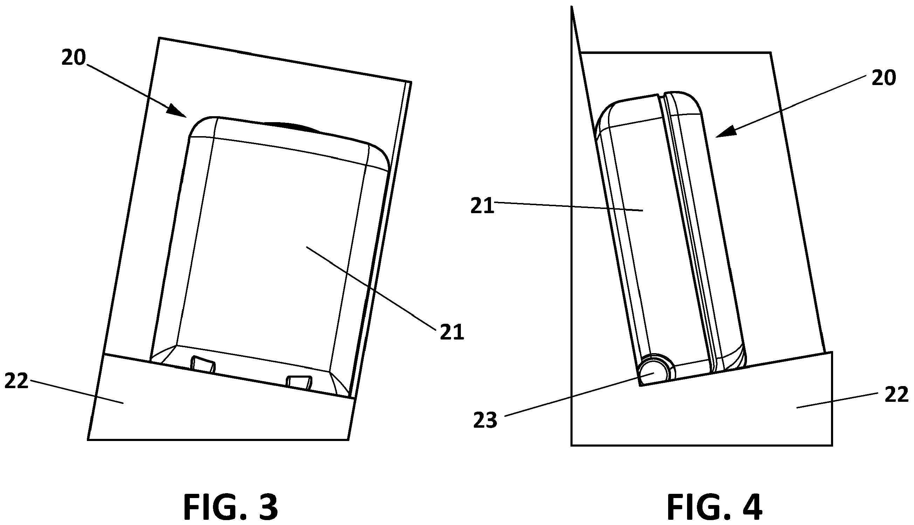

To start, Figure 2 shows the inner space 20 in which carry-on baggage **21** is placed and which has certain special features. The first one is that the inner space **20** has a base **22** that is tilted in one or two directions, for example as shown in Figures 3 and 4, enabling the baggage to be positioned with respect to one or two fixed edges respectively. This facilitates the determination of the control areas. Said base **22** in turn rests on a scale or load cell, which has a dual use: on the one hand, it acts as a load cell and detects when the weight of the carry-on baggage is stable in order to launch the routines for classifying the baggage, and on the other hand, for capturing the weight thereof in case one of the conditions of the categories defined by the airline requires the use thereof (total weight, volume/weight ratio, etc.). In the inner space **20** one or more sensors **23** are arranged to recognize the baggage **21.** Normally the sensors **23** used are several cameras: one of these placed in a fixed and particular position that enables a perspective of the baggage placed that is as complete as possible and the remaining ones placed in positions such that they enable images to be captured in which the dimension to be controlled is seen clearly.

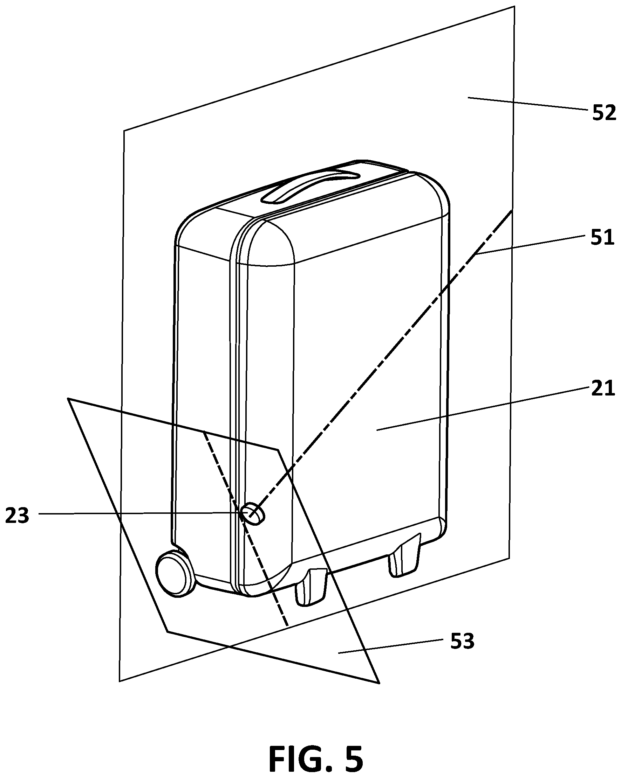

For example, as seen in Figure 5, supposing that the direction of a sensor **23** is given by a vector **51**, Vector_Sensor (for example, in a webcam the vector **51** indicates towards where the webcam points, perpendicular to the lens thereof), the placement of the sensor **23** is such that the vector **51** is contained in a plane **53** that is at a distance of about ±10% of the dimension limit plane **52** that limits the maximum dimension to be controlled. Furthermore, these cameras can be repositioned based on the particular needs or conditions of each dimension.

Moreover, and as the control entails an analysis of visual information (images) captured by different sensors **23** (cameras), the conditions in which said images are captured must be homogeneous. Thus, the inner space **20** where the carry-on baggage **21** is placed is conveniently illuminated such that the image capturing conditions are always as homogeneous as possible, regardless of the lighting conditions of the place in which the control equipment **12** is placed (common areas, brightly lit terminals, shadows caused by edges or by the passenger, etc.).

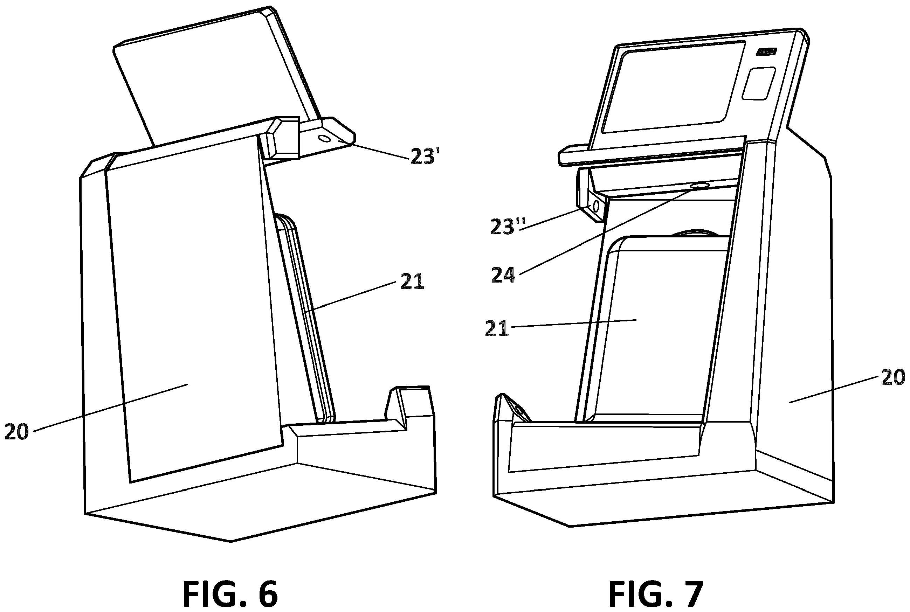

Figures 6 and 7 show the lighting **24** of the inner space **20** and the possible location of two other cameras, the sensors **23'** and **23"**, which are placed in places of the inner space **20** that, together with the sensor **23** shown in Figure 5, enable the three dimensions of the carry-on baggage **21** to be controlled. In the examples shown, the sensor **23** controls the thickness dimension, the sensor **23'** controls the height, and the sensor **23"** controls the width.

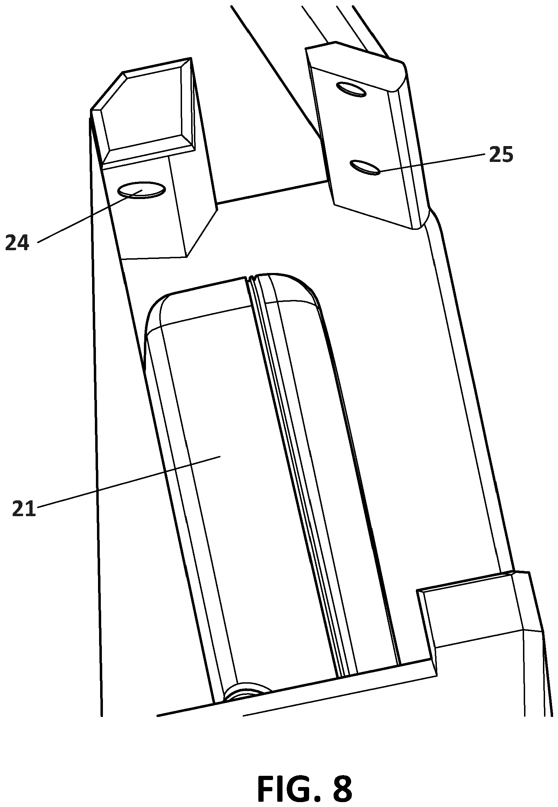

Figure 8 shows that the inner space **20** has an additional camera **25** that captures the image of the carry-on baggage **21** for the classifier which determines a category of carry-on baggage **21.**

In a possible embodiment of the invention, 3D cameras **25** such as Microsoft Kinect can be used in order to generate a three-dimensional reconstruction of the carry-on baggage **21**, so that it has the shape it has, the information from the 3D model generated can be analyzed and a result to said classification is provided by combining both technologies, on one hand classifiers, preferably Bayesian ones, and on the other, the flexibility that having the carry-on baggage **21** reconstructed in 3D gives. Thus, it can even be simulated whether the luggage fits in the overhead bin of the plane intended for it, or under the seat, etc., showing the passenger said information which is exact. With the 3D reconstruction, the equivalent rectangular volume that would occupy the same volume can even be taken out in order to simulate that it can be put in the bin, and playing with the densities (weight volume ratio) in order to make decisions.

The control equipment **12** performs tasks which involves the control of a set of conditions that make up a category of carry-on baggage **21.** Thus, the control equipment **12** checks one by one the specific conditions that correspond to said airline and, if applicable, to the type of carry-on baggage **21** introduced. Said conditions can be dimensions, weight, weight/volume ratio, color, shape, type of baggage, etc.

When a condition or group of conditions are verified, it is analyzed where said group makes up a specific category of carry-on baggage **21** (and that cannot be included in other categories).

If the conclusion is reached that said set of conditions, combined with each other, give rise to a specific category, the categorizing process is concluded. If not, it continues analyzing conditions and seeing if they make up a specific category, until said category is determined for the carry-on baggage **21** located in the inner space **20.**

The control process that the control equipment **12** carries out starts by capturing an image from at least one of the sensors **23** (camera in perspective). Using this image, a classification routine is launched in order to determine the type of carry-on baggage **21** placed in the inner space **20**, if necessary based on the set of categories defined by the airline (there will be airlines that will not want to discriminate characteristics by baggage type). Said classification routine offers the type of carry-on baggage **21** located in the inner space **20** as a result, for example if it is a small suitcase with wheels (trolley), a hand bag like a laptop case, travel bag, backpack, etc., using a set of parameters provided from the learning of the system as an input. This classification routine works by launching repeating classifiers that work by discriminating types of carry-on baggage by pairs. That is, first it discriminates, for example, trolleys from the rest; then backpacks from the rest (from what remains, removing the previous category), and so on. The order in which the classifiers in pairs are launched is based on what the optimal order that enables the effectiveness percentage of the classifier to be maximized (i.e., for example, that it knows to say that the carry-on baggage **21** located in the inner space **20** is a backpack with 98% effectiveness). Furthermore, a "smart classification" can be implemented such that upon providing the results of the control of the baggage, the passenger is shown a button with the result, and a series of buttons to correct the decision. Based on this it can progressively feed the learning of the classifiers based on all the decisions that the classifier has made and which ones were correct or incorrect.

Once the type of carry-on baggage **21** is known, if appropriate, each of the conditions specified by the airline are then analyzed. The first conditions to be analyzed are the dimensional ones, because it can be decided based on these whether it is necessary to verify other ones (for example only controlling the weight if the baggage is larger than certain dimensions).

There can be several sensor means of different kinds used in the inner space **20** to perform the measurement of the dimensions of the carry-on baggage **21**, such as infrared barriers, image sensors such as cameras, ultrasonic sensors, etc.

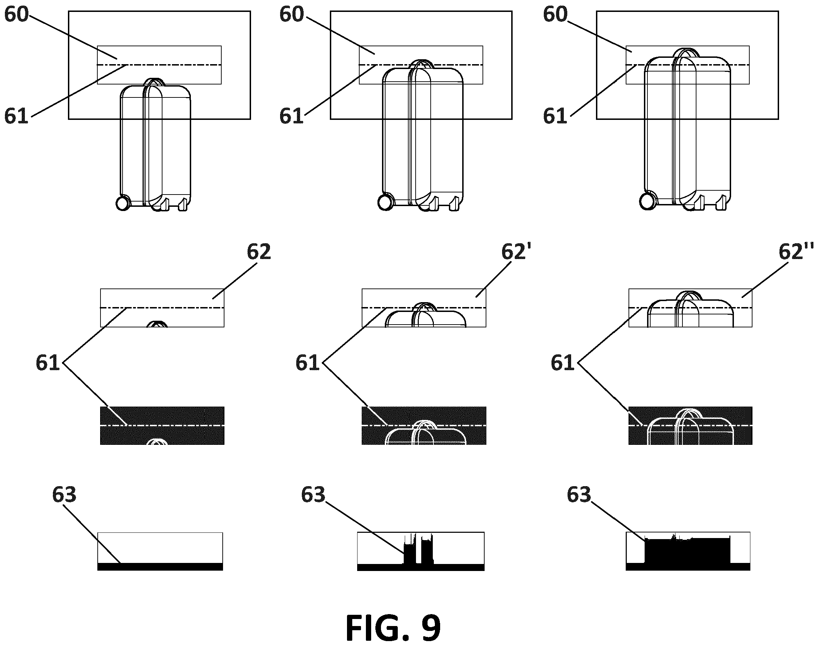

Figure 9 shows examples of the case in which the condition to be analyzed is dimensional, in which case it would be performed as described below. In the first two examples, shown in the left and middle column of Figure 9, the condition (height) is met, while in the third example, illustrated in the last column on the right of Figure 9, such condition is not met. An image from the sensor **23** is captured that corresponds to the dimension to be controlled for this condition. An image is obtained from said capturing that enables said dimension to be controlled as explained previously. The underlying idea of the dimensional control process is to analyze a certain area of the image, called the control area **60**, in order to evaluate whether the carry-on baggage **21** located in the inner space **20** invades said control area **60**, and in this case, how it invades the area **60.** By analyzing how the baggage invades or crosses into said areas, as shown in Figure 6, it can be determined whether the carry-on baggage **21** meets the dimensional condition in that determined direction. The analysis is not based on precision, but rather on determining in which situations or conditions said carry-on baggage **21** would be considered as pertaining to a specific category in a real world operating scenario of the airline, discriminating for example handles, straps, wheels, zippers, different shapes, etc. The control area **60** is a region of the photograph that includes the area in which the carry-on baggage **21** is exceeding the theoretical maximum dimensions. In order to determine whether it is exceeded or not, within the control area **60** one or several critical lines **61** are defined, which are the lines that define the maximum dimensions that are to be considered (with additional tolerances with respect to the maximum theoretical dimensions of the airline, for example). The image **62**, **62', 62"** captured in each case, in Figure 6, of the control area **60** is analyzed throughout said critical lines **61** in order to make a decision about the dimensional condition that is trying to be met.

In this previously discussed case, of implementing a three-dimensional model of the carry-on baggage **21**, in the baggage analysis process, instead of a control area in which a critical line is chosen, control volumes are used in which critical areas are analyzed. The 3D camera enables the volume to be reproduced in 3D and only one volume in 3D (the equivalent of the 2D photograph) would be necessary to analyze three control volumes with three critical planes.

It is worth noting that each camera or sensor **23** is configured during the configuration process for the control equipment **12** in which the cm/pixel scale is defined for a given resolution, for example 640x480px of the captured image, that is, to which pixel each measurement in cm corresponds (if the resolution is changed the cameras must be reconfigured). Furthermore, at least one pixel reference is configured to be able to reconstruct the Control Area upon taking each image, based on the maximum dimensions of each airline. In this manner, the pixels to be analyzed can be interpolated or extrapolated based on the dimensions in cm of each airline.

Thus, once the image to be analyzed for the control of a given dimension has been taken, the first step is to define the control area **60** based on the dimensional conditions of the airline in question that are to be controlled. Subsequently, a critical line **61** is defined that is the line inside the control area that is found at the distance of the maximum dimension allowed. A critical line **61** is defined for each dimension that is to be controlled by using the same control area **60.** At this point the control area **60** is passed through two filters. The first is a line filter (Edge detection) that gives as an output the lines that define the contours and the outlines of all the contents of the control area. The second is a grayscale filter, which transforms the contents of the control area into grayscale.

Then, an analysis of the critical line **61** is performed by extracting the cut-off points of the lines that are obtained from the first filter, analyzing the separation thereof and the average color (coming from the grayscale filter) between the cut-off points with the critical line. Once the critical line **61** is analyzed, a percentage value of baggage that exceeds the critical line **60** is extracted. Having reached this point, if a certain percentage of the baggage (between 25 and 35%, which is a parameter that is adjustable as part of the configuration of each set of equipment) passes the critical line **61**, said baggage is susceptible to not meeting the maximum dimension condition that is being analyzed. Subsequently, if this is the case, a corrector filter is applied to the critical line **61.** The intention of this filter is to discriminate what situations or infringements of said condition are due to elements that should be discriminated, such as handles, wheels, straps, zippers that project, etc. This corrector filter is based on the analysis of a distribution of color **63** of the critical line **61**, such that, depending on the shape in which the color or colors are distributed along the critical line **61**, it is decided whether or not the infringement condition of said maximum dimension should be corrected when it detects that what exceeds said dimension is, for example, from a strap that projects, or to maintain the infringement of the mentioned condition. The analysis of said color distribution **63** can be performed by means of the analysis of color curves pixel by pixel, or even using a classifier similar to those mentioned previously, which discriminates based on several types of color distribution that are accepted and not accepted.

As another option to the dimensional condition analyzed, the control equipment **12** can control additional conditions specified by the transportation company. For example, if the condition to be controlled is the weight, the data of the weight of the baggage **21** is read directly from the scale situated in the inner space **20.** If the condition to be controlled is, for example, the color of the baggage, the image captured by the sensor **23** is then analyzed, such that, by analyzing the image by means of certain filters and routines, the average or predominant color can be extracted from the carry-on baggage.

After the decision of whether each condition is met, if the condition analyzed is not met and is excluding, the baggage will be classified directly without controlling more conditions. If it is not, the next condition is then analyzed.

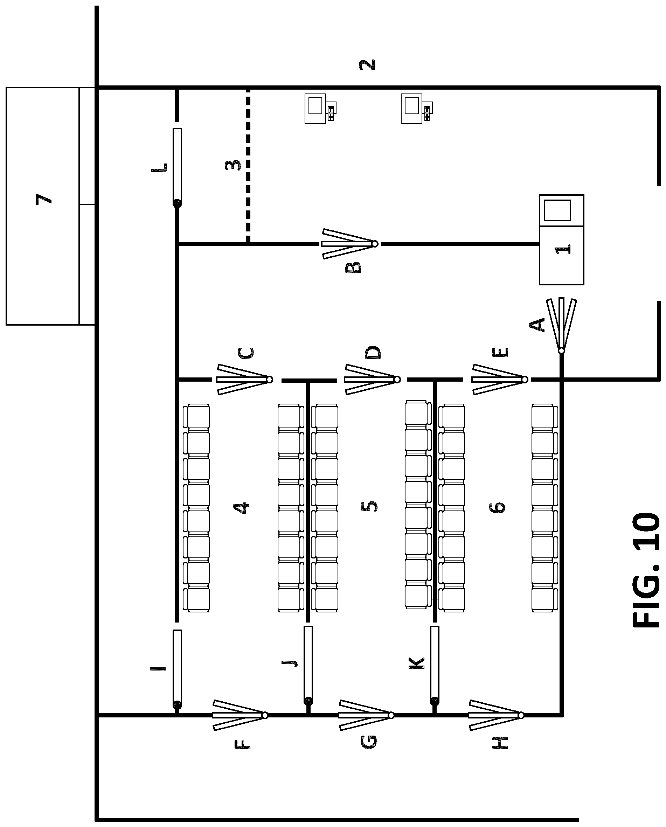

Figure 10 shows an example of an application scenario of the invention, with the steps that a passenger follows in the boarding management process that the integral system that is described carries out automatically. The passenger first passes through a control and passenger access point **1**, where the allowances or pending payments, the ticket status or class, and the access of the passenger to the different boarding areas **4, 5, 6** are controlled, based on the profile of the passenger, allowing or denying said access by means of controlled access barriers **A, B, C, D, F, G** and **H,** which can be placed for this purpose and that are controlled by the access management subsystem **14.** Said controlled access barriers **A, B, C, D, F, G** and **H** allow or deny the passage of the passenger simply by reading their boarding pass. Furthermore, by means of some of the barriers **F, G** and **H**, the exit of the passengers that have already accessed some of the pre-boarding areas towards common areas (bathrooms, for example) and their reentry can be allowed without needing to pass through the passenger control point **1** again.

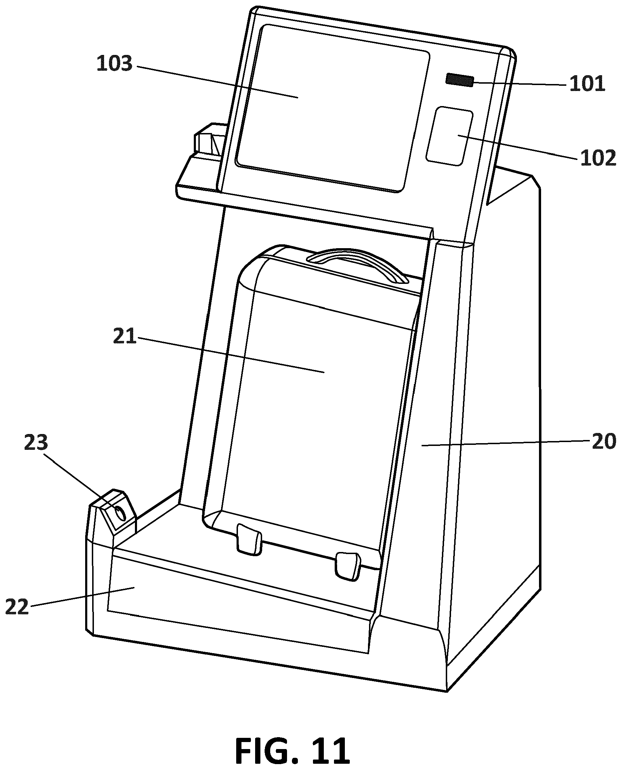

Figure 11 shows the pieces of control equipment **12** that are arranged in the passenger control point **1**, comprising an inner space **20** with at least one sensor **23** for the analysis of the carry-on baggage **21** that the passenger places in the inner space **20**, and a boarding pass scanner or reader **101** and one or more passenger ID readers **102** which scans identification documents, such as National IDs, passports, etc., for the control of the passenger. Additionally, a screen **103** is provided in the passenger control point **1** for assisting the passenger and the user in using the system.

Furthermore, the integral control system for passengers and baggage has, as shown in Figure 10, one or several payment points **2** so that the passenger can satisfy the allowances or pending payments and a drop-off point for carry-on baggage to be checked **3.** The system has as many boarding areas **4, 5, 6** as phases into which the airline or airport manager wants to divide the passageway for boarding the aircraft. The pre-boarding areas are placed such that, in the exemplary case shown in Figure 10, the passengers in the boarding area 4 are those that board first (for example, passengers with priority boarding passes), those in area **5** board second (last seats in the aircraft) and those in area 6 board last (first seats of the aircraft), as an example. The passage to the different boarding areas **4, 5, 6** is enabled by means of the remote opening doors I, J and K.

A certain passenger, who does not have carry-on baggage or has small carry-on baggage meeting the conditions of the airline, arrives at the passenger control point **1.** If they have carry-on baggage, they place it in the inner space **20** that is in that control point **1**, and follows the instructions on screen **83.** If they do not have carry-on baggage, only their identification is scanned (passenger ID, passport, boarding pass). In both cases, either without carry-on baggage, or with carry-on baggage approved for access to the cabin, the passenger control point **1** enables their access to the pre-boarding area, showing the exact pre-boarding area corresponding to said passenger on the screen (for example, area **4, 5** or **6**), enabling their access through the barrier A and in turn through the access barrier **C, D** or **E** that corresponds to the assigned pre-boarding area **4, 5** or **6.** If the passenger wanted to access a pre-boarding area not enabled for him/her, the barrier would deny access for them.
In contrast, if another passenger arrives at the passenger control point 1, they place their carry-on baggage in the inner space **20** of the passenger control point **1** and it is determined that it does not meet the conditions to be transported in the cabin (this is then considered as check-in baggage), the passenger receives the corresponding information on the screen, both regarding the allowance that must be paid and information on how to proceed. They are informed that they must go to one of the enabled payment points **2**, not being allowed access by the barrier **A.** Thus, this passenger goes to the payment points **2** to pay the corresponding allowance. Once said allowance is paid, the payment point **2** issues both the receipt of the payment as well as the tag to be placed on the carry-on baggage in order to send it to the hold of the plane, this information being sent by means of the central computer platform **11** of the system to the computer system of the airline for the storage thereof (controlled tag numbering). Once the passenger has tagged their carry-on baggage, they then drop it off in the drop-off or baggage check-in area **3.** Furthermore, upon making the payment, the system enables the passenger to access the different pre-boarding areas through the barrier B, indicating to them, once they have paid, which area corresponds to them. Thus, once the allowance is paid and the carry-on baggage is dropped in the drop-off area **3**, the passenger accesses the assigned pre-boarding area **4, 5** or **6** that corresponds to them through the barrier **B** and the access barrier **C, D** or **E.**

However, it can also occur that the passenger has baggage that must be checked, but this passenger has pre-paid the allowance fee and, therefore, does not have to pay in the payment point **2** (it could be due to the class or fee of the passenger including the checking of the luggage, or that the passenger has the charge for carry-on baggage allowances pre-authorized on their credit card). In this case, the passenger only needs to go to the payment point **2** to print the tag to be placed on their carry-on baggage and drop it off in the area enabled for dropping off baggage items to be checked **3.** Once they have printed said tag in the payment point **2**, the access to the pre-boarding areas is enabled for them by the barrier **B.**

The payment point **2** simply requests the boarding pass of the passenger to be scanned. Once scanned, it consults the information corresponding to it, the payment of pending allowances, etc., in the central computer platform 11 of the system. The payment point **2** has all the payments enabled that are considered appropriate, such as credit/debit card readers, payment in cash (coins/bills), contactless payment, etc. Once the passenger makes the payment of the corresponding allowance or allowances, the payment point **2** sends, by following a similar process of asynchronous submission management, the update of the record of the passenger in which it is indicated to them if the allowance has been paid and the desired accesses are enabled for them. Furthermore, said payment point **2** can allow the passenger to pay for additional services that the airline may offer and that are not included in the ticket of the passenger, which could be access to VIP areas, priority boarding, etc. In this manner, a passenger without carry-on baggage allowances pending payment can also go to one of the enabled payment points **2** and buy or pay, for example, for access to the VIP area or priority boarding.

When the boarding starts, as shown in the example in Figure 10, the boarding area **4** is the first to access the aircraft. Therefore, the access management subsystem **14** of the proposed integral boarding management system first opens the remote opening door I, which only enables the passage to the boarding gate **7** for the passengers in said boarding area **4.** Once it is decided that the second boarding area **5** may board, the access management subsystem **14** remotely opens the access door **J**, which allows the passengers from area **5** to pass through to the boarding gate **7.** The access door **I** is still open, for which reason the passage through it is allowed. This continues as such, in order to allow boarding for as many areas as are enabled. Once the boarding of the passengers has ended, the access management subsystem **14** opens the door L in order to allow the handling staff to retrieve all the carry-on baggage that must be checked in and have been dropped off in the drop-off area 3, without interfering with the boarding of the passengers, for which reason the time taken is minimized.

Furthermore, before the system can start to work by applying the integral control of the passenger and their carry-on baggage, the system must be configured by an operator or user in order to define the operation mode of all the equipment. The complete configuration process, described herein in a simplified manner, is as follows:
- The first point of the configuration process of the system is to enable access to the same by means of entering a user name and password in the equipment of the system. This user name and password unequivocally identify the access with one certain airline and, if appropriate, with a certain location (airport, boarding gate, etc.). In this manner the system loads, from the central platform **11** on a network (online) with the computer system of the airline (DCS), the information that corresponds to them for the operations thereof, for example: list of flights of said airline from the airport in which it is located, list of categories and characteristics of carry-on baggage to be controlled for said airline, etc. One of the advantages of this process is the way in which the information on carry-on baggage that the airline wants to control is managed. Specifically, each airline defines or can define a list of conditions or characteristics for each category of carry-on baggage that they want to consider in the control process for the baggage. These characteristics or conditions can be: type or category of carry-on baggage, dimensions, dimensions with tolerances, margin of permissiveness in dimensions, color, weight, weight/volume ratio, etc. In addition, it is decided whether each characteristic is excluding in order to apply certain boarding conditions or it can be combined with other ones in order to define the output of the process or the conditions to be applied. For each one of the categories defined the airline defines output information or a series of boarding conditions, which can be printing "Cabin Approved" tags, printing "Carry-on Bag" tags or "Check-In Baggage" tags, and printing the specific placement inside the cabin to be indicated to the passenger, of the payment of different allowances, etc., or a combination thereof. In this manner all the cases that are possible are represented when analyzing all the heterogeneity of carry-on baggage, allowing the airline to adapt their conditions at any time and for each specific situation.
   Furthermore, it is worth noting that global users of the system can be defined for whom access is enabled to a group of airlines or to all the airlines that are represented in the system. For example, there could be the case of an access of a group of airlines (alliances are very common for centralizing costs, such as Star Alliance or Etihad group). In this case, all the information corresponding to said group of airlines is loaded.
- Subsequently, in order to start the process, the flight to which the boarding to be performed corresponds must be selected from a list that has been previously loaded in the system; or it must be indicated that the equipment has been placed in a common area that does not correspond to any boarding in particular (common areas, check-in, security control, etc.). This group of cases determines or limits certain functionalities of the system during the process so that it may be effective and practical for passengers and airlines, in addition to the fact that it allows the passenger to change the airline for which the control of the carry-on baggage is performed, from a list of airlines that have been loaded in the previous step. This selection then adapts the control process for the passenger and their baggage to the set of categories and specific characteristics of the selected airline.
- Furthermore, the system enables the prior configuration of certain functionalities of the process, such as the sounds or alarms in each case, printing options for baggage or "Cabin Approved" tags, requests to scan the boarding pass, etc.
- The configuration of the system is stored in the online central control platform **11**, such that the (processing means of the) equipment can be configured remotely if desired.

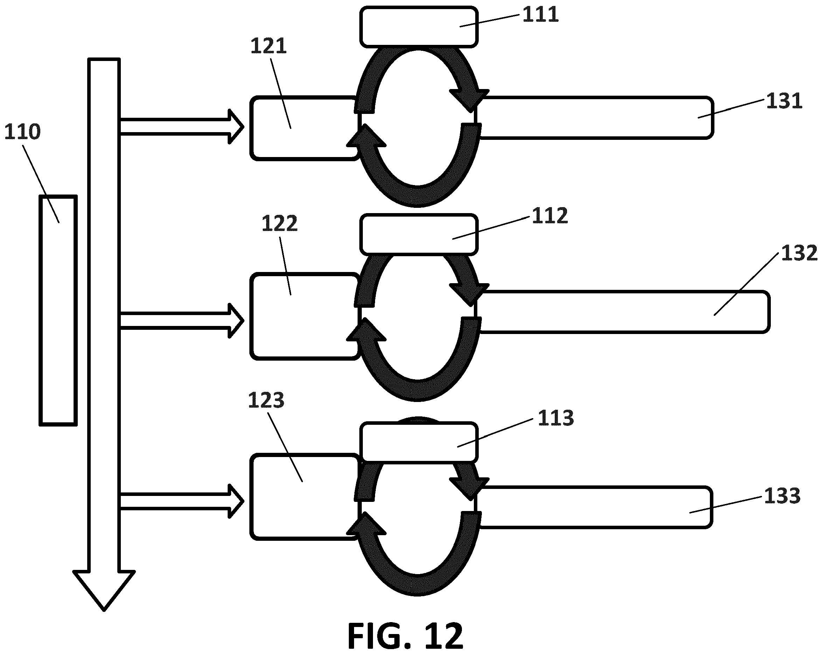

It is worth mentioning the uniqueness of the information uploading process in real time to the online control platform **11**, to the data bases, to the storage of the photographs and the communication with the DCS of the airlines. The uniqueness of this process is rooted in the fact that, if information, photograph registry, etc. submissions are performed in the same luggage and passenger control process, if there were any problem with communication or slow data traffic, the boarding process would slow down excessively. For this reason, in a possible embodiment of the invention, an asynchronous information uploading process has been implemented, as shown in Figure 12. This process determines the types of information to be uploaded or sent (for example, records to the data bases, photographs, XML objects for the DCS, etc.) and it opens an asynchronous worker thread **111, 112, 113** for each one of these types. In this manner, several parallel information sending or uploading processes are established, which are in continuous operation during the time that the boarding or the use of the equipment lasts, working in the following manner:
Instead of the main control process **110** directly sending or uploading the information to where it corresponds, the information to be uploaded is stored in a batch or intermediate local repository **121, 122, 123.** For example, the images of the baggage items and/or passengers to be uploaded to the online control platform **11** are stored in an intermediate local repository **121** which is a local folder; the records of passengers and the DCS records are also stored in respective intermediate local repositories **122** and **123.** Furthermore, each of the asynchronous threads **111, 112, 113** is permanently consulting the contents of said intermediate repositories **121, 122, 123** (each thread to the one it corresponds to), such that if there is information stored inside, it starts to send it or upload it **131, 132, 133,** to where it corresponds (database, FTP server, DCS of the airline, etc.), following a FIFO structure that maintains the order in which the information was generated.

Thus, upon starting the passenger control process **110**, once the mode of operation of the equipment has been defined as mentioned above, a series of asynchronous worker threads **111, 112, 113** are opened in order to upload the generated information without this slowing down the entire process. The passenger control process **110** enables, in a first instance, a dual case:
A) If the passenger to be controlled is not traveling with carry-on baggage, and furthermore the equipment has the option to request the boarding pass from all the passengers activated (the equipment placed in common areas has this deactivated), the access control consists of simply scanning the boarding pass and will simply result in a boarding record of said passenger without carry-on baggage, which is sent or made available to the Departure Control System (DCS) of the airline that uses it. From this scanning of the boarding pass performed by the reader 101, the centralized control platform **11** receives and analyzes the information contained in the pass and eventually generates the corresponding information to be sent to where appropriate (for example, to the DCS and to the centralized control platform **11** itself). Furthermore, if the personal identification control is enabled, the passenger must scan their identification in the reader **102**, as well as place themselves to then take a personal photograph, for the analysis thereof and determining the validity of the identification. If the identification gives a negative result, a sound warning is then emitted and it is indicated that the support of the staff from the airline is needed. If the identification is correct, the process is allowed to continue, in which case the record of the passenger enables the access to it where applicable (for example, the aircraft).
B) On the other hand, if the passenger is traveling with carry-on baggage, they must introduce it in the inner space **20** of the control equipment **12.** Once the control equipment **12** detects, by means of a load cell placed in the lower portion or base **22** of the inner space **20** in which the carry-on baggage **21** is placed, that the weight thereof has been stabilized (this means that it is not moving and the passenger is not moving or touching it), then said carry-on baggage **21** is analyzed. This analysis verifies and compares whether the characteristics and conditions corresponding to the type of carry-on baggage **21** introduced are met. Once all the conditions and the type of carry-on baggage have been determined, the carry-on baggage **21** is classified into one of the categories that the airline has parameterized, showing the corresponding information to the passenger on the screen **23.** At that time, if the boarding pass request were active for all passengers, it is requested for the scanning thereof regardless of the category of the carry-on baggage **21.** If it were not active, the boarding pass is only requested if the category of the carry-on baggage **21** analyzed requires the information contained therein (for example, to print the checked tag for the baggage, or if an allowance payment is required). Once the information of the passenger is scanned by means of their boarding pass, it is then recorded in the corresponding intermediary repository **122, 123** to be sent to the record of passengers **132**, to the DCS of the airline **133**, etc. If the scanning of the boarding pass is not necessary, it is communicated to the passenger that they can proceed to the removal of their carry-on baggage **21** (and to control another one belonging to the same passenger, if they have more). The verifications of the passenger ID can be uploaded to the database upon showing the result of the verification, but in order to prevent more than one verification from being uploaded and there being duplicate records if the verification is to be repeated, the verifications are only uploaded when the baggage is removed.

In another possible embodiment, the order of the steps, 1^{st} Introducing Baggage → 2^{nd} Scanning Boarding Pass, which has been described can be reversed. First the boarding pass is scanned and, once the passenger has been identified, one or several items of carry-on baggage **21** can be validated, always associated to the passenger who just scanned the pass.

Later and optionally, if the control equipment has the printing of the corresponding tags activated ("Cabin approved bag" tag, numbered "Bag Tag" tag, etc.) the routines necessary for said printing are started up. Specifically, in the case of the numbered "Bag Tag" tags, they must be printed following the standard IATA format, in addition to containing consecutive numbering unique to each airline. Based on how each airline is worked with, the centralized control platform **11** proceeds to consult with the computer system of the airline regarding the numbering to be printed, or numbering that is independent and consecutive for each airline but internal to the centralized control platform **11**, etc. is generated. In any of the ways, it then prints the corresponding tag, if appropriate. It may be the case that, still corresponding to the category of carry-on baggage detected, the printing of an IATA checked tag for the hold would not be performed in the same control point **1** for the passenger but rather, before the payment of the corresponding allowance in the payment point **2** enabled to this end, it is printed in said payment point **2** once said allowance is paid. Then, if the category of carry-on baggage detected corresponds to the payment of some type of allowance, fee, penalization or cost, said information is shown on the screen **23** together with the category of the carry-on baggage, further indicating to the passenger how to proceed (for example, by indicating that they must go to the enabled payment points **2**). Furthermore, if the airline had enabled some type of deferred or remote charging process using the previously requested data from the credit card of the passenger (for example, during the process of purchasing the ticket or printing the boarding pass online, or even within the frequent flyer program of the airline), an "ACCEPT CHARGE" button is shown so that the passenger presses it and explicitly accepts said charge. This point is important as a remote payment solution, since by law, in order for the airline to charge a card it needs prior express approval, even though it has the data thereof beforehand. Having consolidated the acceptance of the charge, when applicable, and the removal of the tag for the carry-on baggage, if printed, it is indicated to the passenger that they can then remove their carry-on baggage **21** and introduce another item if they have several. Once the carry-on baggage **21** has been removed, the corresponding baggage control record as well as the images that were able to be taken of the carry-on baggage (and the passenger, when applicable), modifications of the record of the passenger such as the approval of the charge, approval of access to certain areas (or to the aircraft), etc. are all sent to the corresponding intermediate submission repository or repositories **121, 122, 123.**

In this time, the control equipment **12** returns to the beginning of the passenger control process **110** in order to proceed with the next passenger.

## Claims

1. A system for controlling passengers and baggage **characterized by** comprising:
- a central computer platform (11) that centralizes information related to the control of passengers and baggage,
- at least a control equipment (12) of passengers and baggage with processing means, located in a control point (1) accessible by at least one passenger, comprising an inner space (20) for placing and analyzing at least one item of carry-on baggage (21), the inner space (20) comprising at least one sensor (23, 23', 23", 25) for capturing at least one parameter of the carry-on baggage (21) that is used in determining a category of the carry-on baggage (21), wherein the category of the carry-on baggage (21) is determined by a classifier that runs in the processing means and is compared with a condition defined by a passenger and baggage transportation company;
- at least one payment point (2, 13) in which the passenger, if the comparison between the determined category of the carry-on baggage (21) and the condition defined by the transportation company indicates a pending payment, has means for carrying out the pending payment; and
- an access management subsystem (14) that enables or disables the access to at least one area defined by the passenger and baggage transportation company, based on the comparison between the determined category of the carry-on baggage (21) and the condition defined by the transportation company and, if said comparison indicates a pending payment, based on making the pending payment in the payment point (2, 13);
and wherein the central computer platform (11) is connected on a network to the control equipment (12), to the payment point (2, 13) and to the access management subsystem (14).

2. The system according to claim 1, **characterized in that** the processing means of the control equipment (12) open a plurality of asynchronous worker threads (11, 112, 113) in order to send information related to the control of passengers and baggage to the central computer platform (11).

3. The system according to any of the preceding claims, **characterized in that** the condition defined by the passenger and baggage transportation company is selected from the dimensions, weight, weight/volume ratio, color, shape and type of baggage condition.

4. The system according to any of the preceding claims, **characterized in that** the control equipment (12) further comprises a boarding pass reader (101) and a passenger ID reader (102).

5. The system according to any of the preceding claims, **characterized in that** at least one sensor (23, 23', 23", 25) of the inner space (20) is a camera.

6. The system according to any of the preceding claims, **characterized in that** the inner space (20) has a base (22) tilted with respect to a horizontal plane and that has a weight meter.

7. The system according to any of the preceding claims, **characterized in that** the control equipment (12) is configured to activate a printing of tags on the carry-on baggage (21) based on the determined category of the carry-on baggage (21), the activated printing of tags being performed in the payment point (2, 13).

8. The system according to any of the preceding claims, **characterized in that** it further comprises a drop-off point for baggage to be checked (3) in order to receive tagged carry-on baggage (21) to be checked in the payment point (2, 13).

9. The system according to any of the preceding claims, **characterized in that** the central computer platform (11) is connected on a network to a departure control system, DCS, of an airline.
